# EUROPÄISCHE PATENTSCHRIFT

(11) **EP 3 469 692 B1**
(45) Veröffentlichungstag und Bekanntmachung des Hinweises auf die Patenterteilung: **03.03.2021**
(21) Anmeldenummer: 17734695.4
(22) Anmeldetag: 26.06.2017
(51) Int. Cl.: H02K 7/102, H02K 7/00, H02K 7/10, H02K 1/27

(54) **SICHERE ELEKTRISCHE MASCHINE**
SECURE ELECTRICAL MACHINE
MACHINE ELECTRIQUE SECURISEE

(30) Priorität: 09.08.2016 EP 16183395
(43) Veröffentlichungstag der Anmeldung: 17.04.2019
(73) Patentinhaber: Siemens Mobility GmbH, 81739 München (DE)
(72) Erfinder: ADAM, Christoph, 90411 Nürnberg (DE); BUDIG, Olaf, 91056 Erlangen (DE); FRANK, Hartmut, 09306 Rochlitz (DE); JANSEN, Andre, 46325 Borken (DE); KÖRNER, Olaf, 90469 Nürnberg (DE)
(86) Internationale Anmeldenummer: PCT/EP2017/065650
(87) Internationale Veröffentlichungsnummer: WO 2018/028867

(56) Entgegenhaltungen:
- EP-A1- 2 805 863
- DE-B- 1 118 339

## Beschreibung

Eine elektrische Maschine, wie eine Synchronmaschine oder eine Asynchronmaschine, wird beispielsweise als Antriebsmotor in einem Antriebsstrang verwendet. Der Antriebsstrang dient beispielsweise dem Antrieb eines Fahrzeuges, wobei der Antriebsstrang zumindest die elektrische Maschine aufweist. Weiterhin kann der Antriebsstrang ein Getriebe und/oder eine Kupplung aufweisen. Das Fahrzeug ist z.B. ein Straßenfahrzeug oder ein Schienenfahrzeug, wie eine Straßenbahn, eine Lok, ein Triebwagen, eine S-Bahn oder dergleichen. Mit der elektrischen Maschine ist also ein Schienenfahrzeug oder Straßenfahrzeug antreibbar.

In einem Schienenfahrzeug oder Straßenfahrzeug befinden sich beispielsweise ein, zwei oder mehr Antriebsstränge. So können insbesondere in einem Schienenfahrzeug eine Vielzahl von Umrichtern und Antrieben, wie z.B. Motor-Getriebe Kombinationen, verbaut sein. Beim Ausfall eines Antriebes oder mehrerer Antriebe können verbleibende Antriebe, welche nicht beispielsweise durch einen Fehler ausgefallen sind, weiter betrieben werden. Teil des Antriebs können auch ein Stromrichter, insbesondere ein Umrichter sein, welcher auch ausfallen kann. Beim Ausfall einzelner Umrichter, Getriebe oder Motoren kann das Fahrzeug in einem Redundanzbetrieb und/oder in einem Notbetrieb weiterbetrieben werden.

Um im Fehlerfall einen Schaden am Antriebsstrang zu vermeiden, kann, wie in der DE 10 2013 104 558 A1, eine Überlastkupplung vorgesehen sein, die bei Blockaden im Antriebsstrang (z.B. durch einen Wälzlagerschaden) diesen vom Radsatz abkuppelt.

Aus der DE 1 118 339 ist ein Elektromotor mit auf der Motorwelle axial verschiebbar angeordneter Bremsscheibe, die mit der Motorwelle durch eine Kupplung mit schrägen Anlaufflächen verbunden ist und beim Einschalten des Motors zum Läuferpaket hingezogen wird, bekannt. Die Bremsscheibe steht unter der Wirkung eines Kraftspeichers, der vorzugsweise zwischen der Bremsscheibe und dem Läufer angeordnet ist und die Bremsscheibe bei abgeschaltetem Motor vom Läufer weg und gegen federnd vorgespannte Bremsklötze drückt. Durch das durch die Schwungkraft der angetriebenen Masse bedingte Weiterlaufen der Motorwelle erfolgt eine Verdrehung derselben gegenüber der Bremsscheibe, die in Verbindung mit der schrägen Anlauffläche der Kupplung den Bremsdruck erhöht. Der Kraftspeicher ist z.B. eine zwischen Bremsscheibe und Läufer um die Motorwelle angeordnete Schraubenfeder oder z.B. Fliehkrafthebel, welche an der Bremsscheibe angeordnet sind.

Aus der EP 2 805 863 A1 ist ein Antriebsstrang für einen Schienenfahrzeugwagen sowie ein Verfahren zur Erkennung eines Überlastfalls in einem Antriebsstrang bekannt. Es wird ein Antriebsstrang für einen Schienenfahrzeugwagen umfassend eine Radsatzwelle und ein Großrad zur Übertragung eines Drehmoments von einer Antriebseinheit auf die Radsatzwelle vorgeschlagen. Eine Überlastkupplung mit vorgegebenem Schaltmoment ist drehfest mit der Radsatzwelle verbunden und koppelt das Großrad drehfest mit der Radsatzwelle. Die Überlastkupplung gibt bei Überschreiten des Schaltmoments das Großrad gegenüber der Radsatzwelle frei. Durch den Einsatz einer bevorzugt automatischen Überlastkupplung, die am oder im Großrad des Treibradsatzes angeordnet ist, kann eine Blockierung des Antriebsstrangs bei einer Blockierung beispielweise der Antriebseinheit vermieden werden. Die Antriebseinheit umfasst eine Drehmomentenerzeugungseinrichtung, z.B. einen elektrischen Fahrmotor, und eine Drehmomentenübertragungseinrichtung, z.B. ein Getriebe. Die Überlastkupplung trennt den Antriebsstrang aus Antriebseinheit und Treibradsatz in einem abtriebsseitigen Bereich, d.h. zwischen Radsatzwelle und Getriebe. Tritt eine Blockierung im Antriebsstrang auf, beispielweise im Getriebe, wird der Antriebsstrang durch die Überlastkupplung unterbrochen, welche die Radsatzwelle freigibt, so dass keine Reaktionsmomente von dem Treibradsatz in das Getriebe eingeleitet werden können. Der Treibradsatz wirkt nach Freigabe durch die Überlastkupplung als Laufradsatz ohne Drehmomentkopplung zum Schienenfahrzeugwagen.

Eine Aufgabe der vorliegenden Erfindung ist es, die Betriebssicherheit einer elektrischen Maschine bzw. eines Fahrzeuges, insbesondere eines Schienenfahrzeuges, zu erhöhen.

Eine Lösung der Aufgabe gelingt bei einer Antriebsstrang nach Anspruch 1, bei einem Schienenfahrzeug nach Anspruch 5 bzw. bei einem Verfahren zum Bremsen eines Rotors nach Anspruch 7. Ausgestaltungen der Erfindung ergeben sich beispielsweise nach den Ansprüchen 1 bis 6, und 8 bis 13.

Eine elektrische Maschine, wie eine Synchronmaschine oder eine Asynchronmaschine, weist ein Bremselement und eine Freigabeeinrichtung auf. Die Freigabeeinrichtung dient der Freigabe des Bremselementes. Mittels des Bremselementes wird beispielsweise eine Reibkraft erzeugt. Ein Rotor der elektrischen Maschine weist das Bremselement und die Freigabeeinrichtung auf. Die Synchronmaschine ist beispielsweise eine permanentmagneterregte Synchronmaschine, deren Rotor Permanentmagnete aufweist. Die elektrische Maschine weist insbesondere eine Überlastkupplung auf bzw. ist mit dieser Verbunden. Durch eine Freigabe des Bremselementes ist die Überlastkupplung auslösbar. Die Auslösung erfolgt, da durch das freigegebene Bremselement ein Moment entsteht, welches zur Auslösung der Überlastkupplung führt. Durch die Freigabe des Bremselementes erfolgt ein Austritt aus dem Rotor. Durch den Austritt aus dem Rotor gelangt das Bremselement ganz oder teilweise in den Spalt zwischen Rotor und Stator. Nach der Freigabe ist das Bremselement also zum Austritt aus dem Rotor vorgesehen und tritt aus diesem aus. So kann das Bremselement durch Reibung und/oder Verkeilung in Bezug auf den Stator und/oder Rotor zum Aufbau eines Bremsmomentes beitragen. Durch das Bremsmoment ergibt sich dann eine Auslösung der Überlastkupplung, wenn also durch das Bremsmoment das Überlastmoment erreicht ist.

Wird beispielsweise ein permanentmagneterregter Motor oder werden eine Vielzahl von permanentmagneterregte Motoren in einem Fahrzeug, wie einem Schienenfahrzeug, oder in einem anderen Antriebsstrang eingesetzt und es fällt ein solcher Motor mit einem Wicklungskurzschluss aus, so wird dieser Motor vom Umrichter abgetrennt. Nach Erkennen des Wicklungskurzschlusses wird der fehlerbehaftete Motor, bzw. werden die fehlerbehafteten Motoren nicht mehr weiter mit äußerer Spannung gespeist. Ohne weitere Zusatzmaßnahme wird der Rotor des fehlerbehaften Motors bzw. des nicht mehr an der Speisespannung liegenden Motors, aber dennoch weiter rotiert. Im Fall eines Schienenfahrzeuges geschieht dies über den Rad-Schiene-Kontakt, durch welchen der entsprechende Rotor auch ohne Bestromung weiterhin durch das fahrende Fahrzeug in Rotation versetzt ist, bzw. versetzbar ist. Dies kann bedeuten, dass auch wenn der Motor vom Umrichter, der diesen im Normalbetrieb speist, getrennt ist oder von diesem nicht mehr gespeist wird, die defekte Statorwicklung (es liegt z.B. ein Wicklungskurzschluss vor), durch den Permanentmagnet-Rotor induziert wird. Dies wird durch die Polradflussverkettung bewirkt. Die induzierte Spannung treibt einen Fehlerstrom über die Fehlerstelle im Stator. Dies kann zu Lichtbögen und/oder hohen lokalen Stromwärmeverlusten führen, die die Isolation der Statorwicklung überhitzen können. Dies kann auch dazu führen, dass die Isolation der Statorwicklung verbrennt und/oder ihre elektrisch isolierende Wirkung verliert oder reduziert. Darüber hinaus kann es durch die Wärmeentwicklung zu einem Schmelzen der Leiterwicklungen im Stator kommen, wobei die Leiterwicklungen beispielsweise aus Kupfer oder einer Kupferlegierung sind. Dies kann auch nach außen am Motor, welcher eine elektrische Maschine ist, zu Erwärmung, leichter oder verstärkter Rauchentwicklung, etc. führen.

In einer Ausgestaltung der elektrischen Maschine weist diese eine Sicherheitskupplung auf. Eine Aufgabe der Sicherheitskupplung ist es, den Motor im Fehlerfall von rotierenden Teilen zu trennen, also beispielsweise von einem Radsatz eines Schienenfahrzeuges abzutrennen, so dass der Rotor des Motors nicht mehr rotiert. So kann erreicht werden, dass keine Spannung mehr in die Statorwicklung induziert wird. Dadurch kann eine weitere Beschädigung und/oder Erwärmung des Motors, welcher stillzusetzen ist, also insbesondere einen Wicklungskurzschluss im Stator aufweist, verhindert werden. So können also die obig beschrieben Auswirkungen nicht mehr auftreten.

In einer Ausgestaltung der elektrischen Maschine wird die Sicherheitskupplung durch das Bremselement aktiviert, wobei das Bremselement z.B. ein Permanentmagnet oder ein weichmagnetisches Element ist. Handelt es sich bei der Sicherheitskupplung um eine Kupplung, welche ab einem bestimmten Drehmoment die Kupplung löst, so ist durch das Bremselement zu erreichen, dass das notwendige Drehmoment erreicht bzw. überschritten wird, damit die Sicherheitskupplung auslöst und den Rotor der elektrischen Maschine von den sich weiter rotierenden Teilen trennt, wie dies beispielsweise der Radsatz eines Schienenfahrzeuges ist. Durch die Freigabeeinrichtung ist im Fehlerfall das Bremselement freizugeben, damit eine Bremsung des Rotors der elektrischen Maschine erfolgen kann und so ein Drehmoment aufgebaut wird, durch welches die Sicherheitskupplung ausgelöst wird, damit der Rotor vom Antriebsstrang gelöst wird.

In einer Ausgestaltung der elektrischen Maschine hat das Bremselement einen eckigen Querschnitt wie einen dreieckigen Querschnitt oder einer vier- bzw. fünfeckigen Querschnitt. Durch die Ecken kann die Bremswirkung verbessert werden.

In einer Ausgestaltung der elektrischen Maschine hat das Bremselement einen runden, halbrunden oder ovalen Querschnitt. So kann erreicht werden, dass die Bremswirkung bzw. der Momentenverlauf beim Bremsen sanfter ist.

In einer Ausgestaltung der elektrischen Maschine weist die Freigabeeinrichtung eine Bandage auf. An den jeweiligen Enden des Rotors der elektrischen Maschine wird ein Bremselement, oder werden eine Vielzahl von Bremselementen beispielsweise in den Pollücken des Permanentmagnet-Rotors mit versenkten Magneten durch die Bandage bzw. die Bandagen gehalten. Als Bandagematerial eignen sich z.B. eine Glasfaserbandage und/oder eine Kohlefaserbandage. In einer Ausgestaltung sind weist das Bremselement bzw. weisen die Bremselemente das gleiche oder ein ähnliches Materialverhalten auf wie Elektroblech. Ein Bremselement kann beispielsweise geblecht ausgeführt sein, wobei hierfür z.B. Elektroblech verwendet wird. Ein Bremselement kann auch ein Soft-Magnetic-Composite aufweisen bzw. aus diesem bestehen. Damit bleibt das elektromagnetische Verhalten axial über die Rotorlänge zumindest annähernd gleich.

Ein mögliches Material für die Bandage ist eine mit einem Verfestiger getränkte Glasfasermatte oder Kohlefasermatte. Die Schmelztemperatur des Verfestigers liegt beispielsweise zwischen ca. 200°C und ca. 300°C, insbesondere zwischen ca. 250°C und ca. 280°C. Auch die Glastemperatur des Verfestigers kann in diesem Bereich liegen. Hierfür eignen sich insbesondere Thermoplaste. Um die Freigabe des Bremselementes abhängig von der Leistung und/oder Drehzahl und/oder der Statortemperatur im Fehlerfall zu beeinflussen können Verfestiger unterschiedlicher Schmelztemperatur für unterschiedliche Maschinen verwendet werden. Auch die Faserstärke und/oder die Faserdichte der verwendeten Matte kann abhängig von der Maschine gewählt werden, damit ein sicheres Auslösen erzielt werden kann. Die Matte kann eine Webstruktur, eine Faserstruktur und/oder eine Matrixstruktur aufweisen. Die Matte kann auch als ein Band ausgeführt sein.

Die Bandage kann bezüglich des dafür verwendeten Materials in Hinblick auf Übergangstemperaturen bei Matrix und Faser der Bandage an ein bestimmtes Temperaturverhalten angepasst sein. Beispielsweise kann der deutliche mechanische Eigenschaftsabfall der Matrix bei Überschreiten der Glastemperatur (schubbelasteter Bereich) genutzt werden. Auch können die Eigenschaftsänderungen von Fasern in der Bandage oberhalb eines relevanten Temperaturbereiches genutzt werden. Der relevante Temperaturbereich ist beispielsweise von der Temperatur vorgegeben, welche im Kurzschlussfall erwartet wird. Oberhalb dieser Auslösetemperatur kann die Festigkeit der Fasern in der Bandage derart abnehmen, dass ein Bremselement im Rotationsbetrieb der Maschine nicht mehr gehalten werden kann und z.B. in den Luftspalt tritt. Fasern können z.B. einen Kunststoff wie PET aufweisen oder auch Glas, welches bei höheren Temperaturen seine Eigenschaften ändert und beispielsweise seine Zugfestigkeit reduziert.

Die Bandage kann auch bezüglich des konstruktiven Aufbaus angepasst sein. So können in die Bandage Schubfeldern zur Unterstützung matrixdominierter mechanischer Eigenschaftsänderungen vorgesehen sein. In einer Kombination mit einem für die Bandage ausgewählten Material kann eine thermische Ausdehnung der Bandage angepasst werden, so dass z.B. ab ca. 200°C kein Kraftschluss mehr vorhanden ist. Dies ist auch durch das Konstruktionsprinzip beeinflussbar.

In einer weiteren Ausgestaltung der Bandage kann für diese ein Sandwich-Aufbau vorgesehen sein. Dabei kann eine Entkopplung der Mechanik von z.B. zwei Compositelagen durch einen sich erweichenden Sandwichkern (thermoplastische Strukturen) erfolgen.

Je höher der Temperaturunterschied zwischen Dauer- und Überlastbetrieb der elektrischen Maschine mit Stator und Rotor ist, desto präziser kann die Freigabeeinrichtung, also insbesondere die Bandage, eingestellt werden. In einer Ausgestaltung der elektrischen Maschine ist der Temperaturunterschied zwischen Dauerbetrieb und Überlastbetrieb zumindest 20 Kelvin.

In einer Ausgestaltung der elektrischen Maschine ist die Bandage im Bereich des Bremselementes geschwächt. Die Durchschnittliche Festigkeit der Bandage im Bereich der zu haltenden Permanentmagnete ist höher, als die durchschnittliche Festigkeit der Bandage im Bereich des zumindest einen Bremselementes. So kann die Empfindlichkeit der Freigabe des Bremselementes eingestellt werden, ohne das Haltevermögen für die Permanentmagnete zu beeinflussen.

Dreht sich der Rotor, so wirken auf das Bremselement Zentrifugalkräfte. Kommt es zu einem Wicklungskurzschluss im Stator, erwärmt sich dieser und damit auch der Rotor. Durch die Erwärmung wird die Bandage des Rotors geschwächt, welcher das Bremselement hält. Die Bandage übt eine Zentripetalkraft auf. Ist die Bandage so geschwächt, dass diese die Zentripetalkraft nicht mehr aufbringen kann, so löst sich das Bremselement zumindest teilweise vom Rotor und tritt beispielsweise in den Luftspalt ein bzw. reibt sich an einem radial äußeren Element wie dem Stator. Die Bandage dient hier also auch als eine Freigabeeinrichtung für das Bremselement. Durch die Reibung des Bremselementes mit einem radial äußeren Element ergibt sich ein Bremsmoment.

In einer Ausgestaltung der elektrischen Maschine weist diese eine Überlastkupplung auf, wobei die Überlastkupplung durch eine Freigabe des Bremselementes ausgelöst wird. Dies ergibt sich durch das auftretende Bremsmoment. Überschreitet das durch das radial nach außen tretende Bremselement erzeugte Bremsmoment eine vorgegebene Schwelle, so löst die Überlastkupplung aus und der Rotor der elektrischen Maschine wird von weiteren drehenden Teilen wie z.B. einem Radsatz getrennt. Die Überlastkupplung dient so als eine Sicherheitskupplung.

Die Freigabeeinrichtung dient als Auslösemechanismus für die Sicherheitskupplung, die als Überlastkupplung realisiert ist. Diese Überlastkupplung wird über ein die Betriebs- und Stoßkurzschlussmomente übersteigendes Auslösemoment geschaltet und damit getrennt (z.B. der Motor vom Radsatz). Dieses hohe Blockier-/Bremsmoment entsteht durch das zumindest eine im Wicklungskurzschlussfall aus dem Rotor in den Luftspalt der Maschine austretende Bremselement. So werden die Sicherheitskupplungen zum Abkuppeln von Motoren vom Antriebsstrang im Fehlerfall (auch bei Fahrzeugen) intern vom Motor selbst ausgelöst. Eine externe Auslösung, beispielsweise durch ein digitales Signal, ist nicht notwendig. In einer Ausgestaltung der elektrischen Maschine ist die Auslösung thermisch induzierbar und betrifft insbesondere einen Wicklungskurzschluss.

Ein Schienenfahrzeug kann mit einer elektrischen Maschine und einem Radsatz, welcher mittels der elektrischen Maschine antreibbar ist, ausgerüstet sein, wobei die elektrische Maschine vom Radsatz in einem Fehlerfall der elektrischen Maschine trennbar ist. Der Radsatz kann dabei über ein Getriebe mittels der elektrischen Maschine antreibbar sein. Um im Fehlerfall den Betrieb des Schienenfahrzeuges weiterhin gewähren zu können, ist eine Sicherheitskupplung zum Abtrennen der elektrischen Maschine vorgesehen. Die Auslösung kann durch ein Bremselement der beschriebenen Art oder durch andere Mechanismen erfolgen. Für den Fehlerfall ist also insbesondere ein Bremselement vorgesehen, welches aus einem Rotor der elektrischen Maschine in den Luftspalt der elektrischen Maschine tritt.

Ein Straßenfahrzeug kann mit einer elektrischen Maschine und zumindest einem elektrisch antreibbaren Rad ausgerüstet sein, wobei die elektrische Maschine vom Rad in einem Fehlerfall der elektrischen Maschine trennbar ist. Das Rad kann dabei über ein Getriebe oder direkt mittels der elektrischen Maschine antreibbar sein. Um im Fehlerfall den Betrieb des Straßenfahrzeuges weiterhin gewähren zu können, ist eine Sicherheitskupplung zum Abtrennen der elektrischen Maschine vorgesehen. Die Auslösung kann durch ein Bremselement der beschriebenen Art oder durch andere Mechanismen erfolgen.

Bei Rotoren mit Oberflächenmagneten, die mittels einer Bandage auf der gesamten Rotoroberfläche gehalten werden, kann diese Bandage bei entsprechender Auslegung der Bandage auch als ein Freigabeelement und die Oberflächenmagnete als Bremselemente wirken, wenn die Bandage durch Hitzeeinwirkung bei einem Wicklungskurzschluss delaminiert.

Bei einem Verfahren zum Bremsen eines Rotors einer elektrischen Maschine zum Antrieb eines Schienenfahrzeuges wird bei einem Fehler im Antriebsstrang des Schienenfahrzeuges von der elektrischen Maschine ein Überlastmoment erzeugt. Durch dieses Überlastmoment wird beispielsweise eine Sicherheitseinrichtung wie eine Sicherheitskupplung ausgelöst. Die Sicherheitskupplung ist insbesondere eine Überlastkupplung. Durch das Erzeugen des Überlastmomentes wird insbesondere der Rotor der elektrischen Maschine stillgesetzt. Zur Erzeugung des Überlastmomentes tritt insbesondere ein Bremselement des Rotors radial aus dem Rotor aus.

Wird durch das Überlastmoment eine Überlastkupplung ausgelöst, so erfolgt die Auslösung durch die elektrische Maschine selbst. Die Überlastkupplung ist derart ausgelegt, dass diese weder bei Momenten im regulären Betrieb noch bei Stoßkurzschlussmomenten auslöst. Übersteigt das Moment allerdings derartige Werte und wird ein Auslösemoment erreicht, so ist die Überlastkupplung aktiviert und trennt die elektrische Maschine mechanisch ab. So ist beispielsweise ein Rotor eines Permanentmagnet-Motors vom Radsatz eines Schienenfahrzeuges trennbar. Das Auslösemoment ist derart gewählt, dass die Kupplung bei Blockiermomenten und/oder Bremsmomenten auslöst, welche insbesondere durch im Wicklungskurzschlussfall aus dem Rotor in den Luftspalt der Maschine austretende Elemente entstehen.

In einer Ausgestaltung des Verfahrens tritt zur Erzeugung des Überlastmomentes ein Bremselement des Rotors radial aus dem Rotor aus und verkeilt sich beispielsweise im Luftspalt. Das Bremselement tritt beispielsweise dann aus, wenn im Falle eines Wicklungskurzschlusses die Fehlerstelle in der Statorwicklung der elektrischen Maschine die in der Nähe liegende Bandage so stark aufheizt, dass diese delaminiert und sich ablöst und/oder auflöst. Die Elemente in den Pollücken treten über die Fliehkraftbeanspruchung (sie werden nicht mehr über die Bandage gehalten) in den Luftspalt aus und führen zu einer Blockade des Rotors, da sich die Elemente zwischen Rotor und Stator verkeilen.

In einer Ausgestaltung des Verfahrens ist der Fehler im Antriebsstrang also ein Wicklungskurzschluss im Stator. Dabei wird in einer weiteren Ausgestaltung zur Erzeugung des Überlastmomentes im Fehlerfall die Bandage delaminiert, wobei die Bandage das Bremselement im fehlerfreien Betrieb hält. Das entstehende hohe Bremsmoment löst dann die Überlastkupplung aus. Der Rotor dreht sich danach nicht mehr und der mit Wicklungskurzschluss beschädigte Motor fällt in einen sicheren Zustand (Stillstand). So kann zur Erkennung eines Wicklungskurzschlusses im Stator und für die Auslösung der Überlastkupplung eine thermische und/oder mechanische Wirkungskette verwendet werden.

Im Folgenden wird die Erfindung anhand von Ausführungsformen unter Bezugnahme auf die Zeichnung näher erläutert. Es zeigen:
- FIG 1: einen halbabgefederten Traktionsantrieb für einen Hochgeschwindigkeitszug;
- FIG 2: ein Schienenfahrzeug;
- FIG 3: einen Radsatz mit Überlastkupplung und elektrischer Maschine;
- FIG 4: einen Längsschnitt der elektrischen Maschine;
- FIG 5: den Querschnitt des Rotors der elektrischen Maschine;
- FIG 6: ein Bremselement; und
- FIG 7: eine Kombination einer ZBG Kupplung (Zahnkupplung-Bahn-Getriebe) mit einer AKR Kupplung (Kombination aus einer Ganzstahlkupplung und einer Zahnkupplung mit auslösenden Tellerfedern).

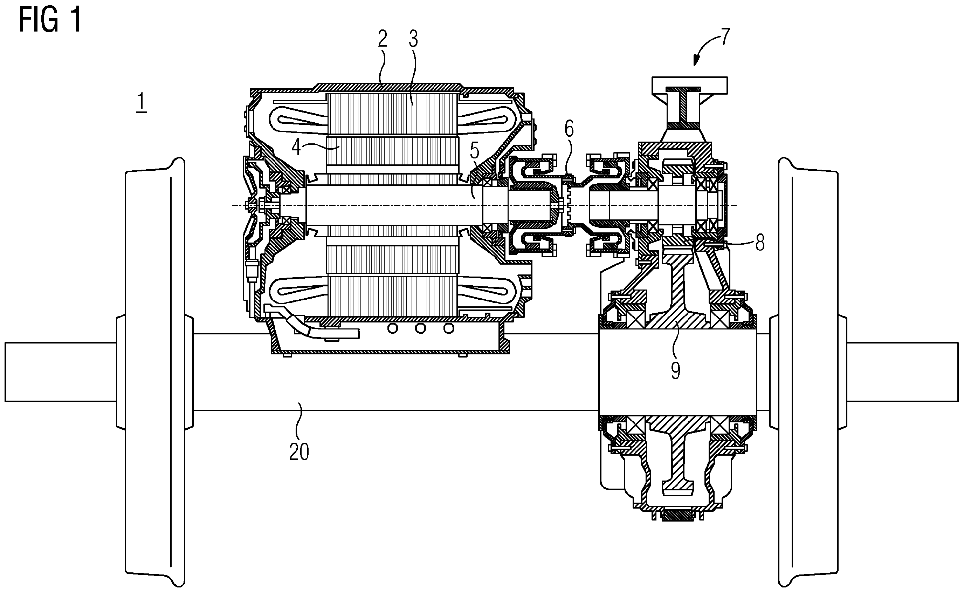

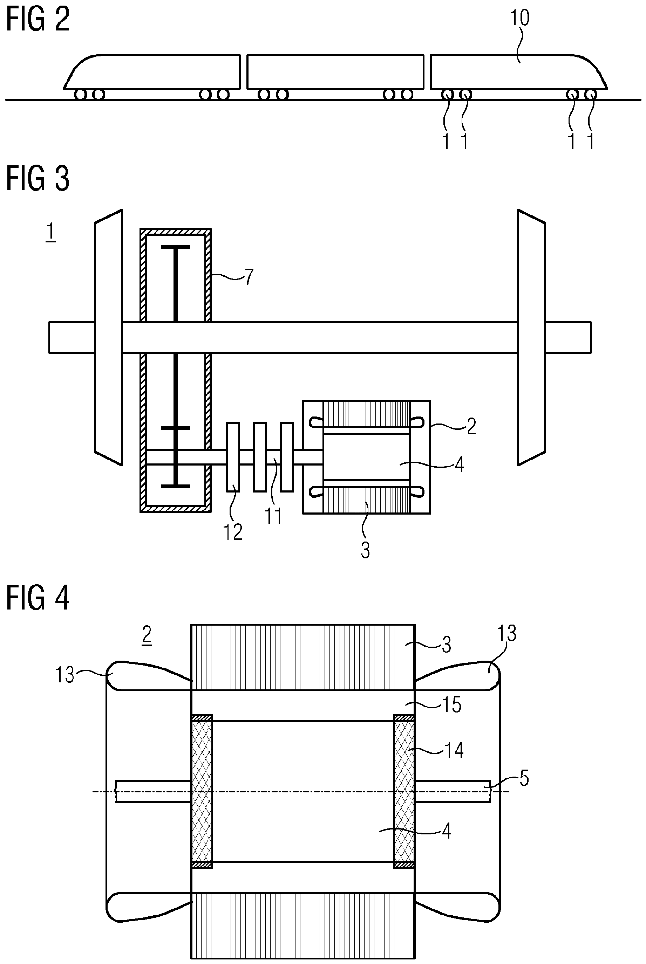

Die Darstellung nach FIG 1 zeigt einen Radsatz 1 mit einem Traktionsantrieb 2 für einen Hochgeschwindigkeitszug. Der Traktionsantrieb 2 ist eine elektrische Maschine. Die elektrische Maschine 2 weist einen Stator 3 und einen Rotor 4 auf. Der Rotor 4 ist starr mit der Motorwelle 5 verbunden. Die Motorwelle 5 ist über eine Kupplung 6 mit einem Getriebe 7 mechanisch gekoppelt. Das Getriebe 7 weist ein erstes Zahnrad 8 und ein zweites Zahnrad 9 auf. Das zweite Zahnrad 9 ist starr mit der Radsatzwelle 20 verbunden. Weist nun die elektrische Maschine 2 in der Statorwicklung einen Kurzschluss auf, soll die elektrische Maschine in einfacher Weise stillgesetzt und von der Radsatzwelle getrennt werden. Weitere Radsätze 1 eines Schienenfahrzeuges 10 sind in FIG 2 dargestellt.

Die Darstellung nach FIG 3 zeigt einen Radsatz 1 welcher auch ein Getriebe 7 aufweist. Die elektrische Maschine 2 ist mit dem Getriebe 7 über eine Bogenzahnkupplung 11 und eine Überlastkupplung 12 gekoppelt. Die Bogenzahnkupplung 11 dient dem Ausgleich von Bewegungen insbesondere im Fahrbetrieb. Die Überlastkupplung dient der Trennung von Getriebe 7 und elektrischer Maschine 2 bei Überlast. Die Überlast kann im Fehlerfall von der elektrischen Maschine 2 selbst hervorgerufen werden.

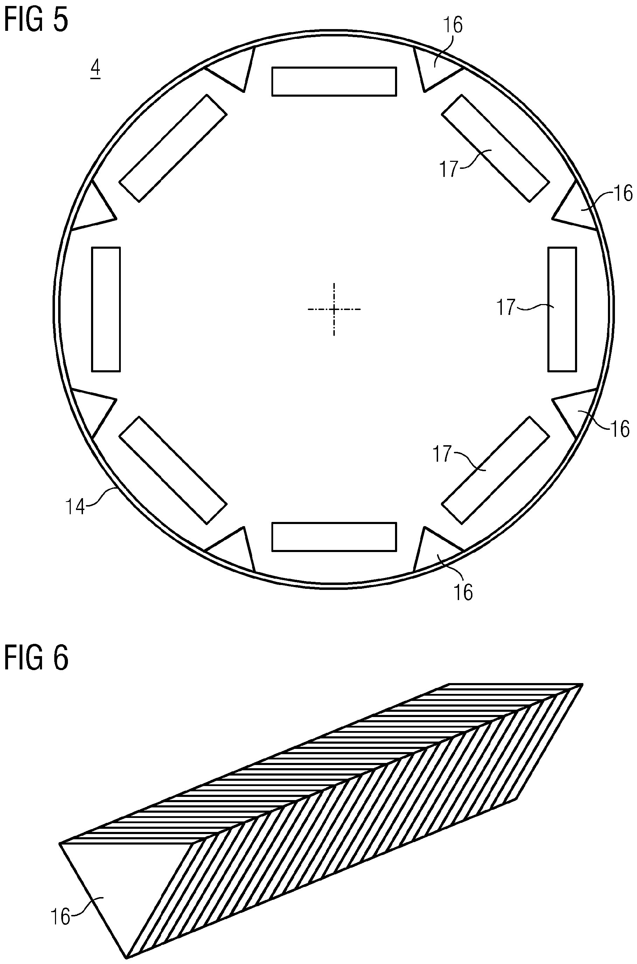

Die Darstellung nach FIG 4 zeigt die elektrische Maschine 2 in einem Längsschnitt mit deren Stator 3, dem Rotor 4 und dem Luftspalt 15 dazwischen. In diesem Längsschnitt sind auch die Wickelköpfe 13 des Stators 3 gezeigt. Der Rotor 4 weist eine Bandage 14 auf. Diese befindet sich an den Stirnseiten des Rotors 4, welcher ein Rotor mit Permanentmagneten 17 ist, welche in FIG 5 dargestellt sind.

Die Darstellung nach FIG 5 zeigt im Querschnitt den Rotor 4 der elektrischen Maschine mit verteilten Permanentmagneten 17 und Bremselementen 16. Die Bremselemente 16 sind in Umfangsrichtung zwischen Permanentmagneten 17 positioniert.

Die Darstellung nach FIG 6 zeigt ein Bremselement 16 in einer perspektivischen Darstellung. Die Bremselemente 16 werden, wie in FIG 5 dargestellt, mittels einer Bandage 14 gehalten. Werden nun beispielsweise an den jeweiligen Enden des Rotors 4 Bremselemente 16 in Pollücken des Permanentmagnet-Rotors 4 mit versenkten Magneten 17 durch Bandagen 14 gehalten (z.B. Glas oder Kohlefaserbandagen), so können diese Bandagen 14 als eine Freigabeeinrichtung für die Bremselemente 16 dienen. Die Bremselemente 16 sind im Materialverhalten zumindest einem Elektroblech ähnlich und beispielsweise geblecht oder aus einem Soft-Magnetic-Composite Material. Damit bleibt das elektromagnetische Verhalten axial über die Rotorlänge annähernd gleich. Im Falle eines Wicklungskurzschlusses im Stator 3 heizt die Fehlerstelle in der Statorwicklung die in der Nähe liegende Bandage 14 so stark auf, dass diese delaminiert und sich ablöst bzw. auflöst. Die Bremselemente 16 in den Pollücken treten über die Fliehkraftbeanspruchung in den Luftspalt 15 aus und führen zu einer Blockade des Rotors 4, da sich die Bremselemente 16 zwischen Rotor 4 und Stator 3 verkeilen. Das entstehende hohe Bremsmoment löst dann die Überlastkupplung 12 (siehe FIG 3) aus. Der Rotor 4 dreht sich nicht mehr und der mit Wicklungskurzschluss beschädigte Motor 2 fällt in den sicheren Zustand, nämlich den Stillstand. Vorteilhaft kann hier dabei auch sein, dass bei anderen Motorblockaden, z.B. infolge eines Lagerschadens (das Lager ist beispielsweise das Lager für den Rotor 4 der elektrischen Maschine 2, welches jedoch nicht dargestellt ist), die Überlastkupplung 12 auch wirkt und ein sicherer Zustand hergestellt werden kann. Für Rotoren mit Oberflächenmagneten, welche nicht dargestellt sind, die durch eine Bandage gehalten werden, kann die Lösung auch eingesetzt werden. Bei der Variante mit versenkten Magneten bei einer permanenterregten Synchronmaschine ist es auch möglich, dass man für eine verbesserte Entwärmung der Maschine im Luftspalt einige radiale Luftkanäle in Rotor und Stator anordnet, um mehr Kühlluft in den Luftspalt einzubringen, was allerdings in der Figur nicht dargestellt ist. Die Bandagen an den Rotorenden schränken den Luftspalt-Kühlluftfluss aber teilweise ein. Durch die einfache und sichere Trennung einer permanentmagneterregten Maschine 2 als Fahrmotor vom Radsatz im Wicklungs-Kurzschlussfall über eine Überlastkupplung 11 durch Erzeugung eines Blockiermomentes ohne dass zusätzliche Sensoren und Aktuatoren zur Kupplungs-Auslösung benötigt werden, wird die Sicherheit des Gesamtsystems erhöht und auch die Einsatzfähigkeit des Schienenfahrzeuges erhöht. Dies gelingt insbesondere durch die Überlastkupplung 12 im Antriebsstrang, die Bremselemente 16, die auch blockieren können und eine Delaminierung der Bandage 14, die die Bremselemente 16 hält, bei Hitzeeinwirkung durch einen Wicklungs-Kurzschlusses. Die Bremselemente 16 sind insbesondere im Aktivteil der elektrischen Maschine nahe den Wickelköpfen 13 vorgesehen.

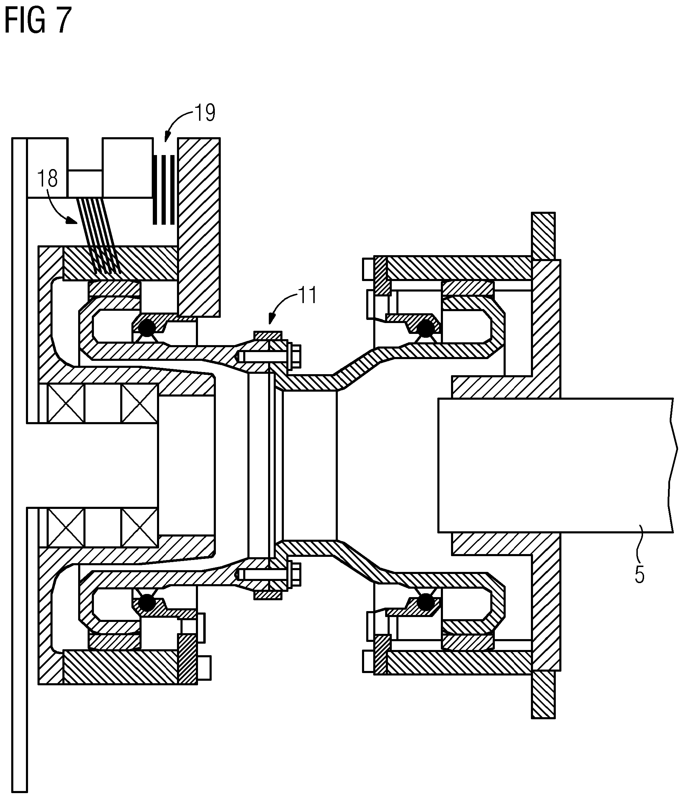

Die Darstellung nach FIG 7 zeigt eine Kombination einer ZBG Kupplung (Zahnkupplung-Bahn-Getriebe) mit einer AKR Kupplung (Kombination aus einer Ganzstahlkupplung und einer Zahnkupplung mit auslösenden Tellerfedern). Gezeigt ist die Kopplung der Motorwelle 5 über die Kupplung 11 in Verbindung mit einer Tellerfeder 18 und einer Ringscheibenkupplung 19 (z.B. ARPEX Lamellen, AKR). Die Anstellung (Drehmomenteneinstellung) der Tellerfeder 18 kann bei der Montage erfolgen.

## Patentansprüche

1. Antriebsstrang eines Fahrzeuges aufweisend zumindest eine Überlastkupplung (12) und eine elektrische Maschine (2), wobei die elektrische Maschine ein Bremselement (16) und eine Freigabeeinrichtung (14) aufweist und wobei ein Rotor (4) der elektrischen Maschine (2) das Bremselement (16) und die Freigabeeinrichtung (14) aufweist,
**dadurch gekennzeichnet, dass** die Überlastkupplung (12) durch eine Freigabe des Bremselementes (16) auslösbar ist, wobei das Bremselement (16) nach einer Freigabe zum Austritt radial aus dem Rotor (4) in den Luftspalt der elektrischen Maschine (2) vorgesehen ist.

2. Antriebsstrang nach Anspruch 1, wobei die Freigabeeinrichtung (14) eine Bandage (14) aufweist.

3. Antriebsstrang nach Anspruch 1 oder 2, wobei das Bremselement ein Permanentmagnet oder ein weichmagnetisches Element ist.

4. Antriebsstrang nach einem der Ansprüche 1 bis 3, wobei eine Auslösung thermisch induzierbar ist und insbesondere einen Wicklungskurzschluss betrifft.

5. Schienenfahrzeug (10) mit einem Antriebsstrang gemäß einem der Ansprüche 1 bis 4 und mit einem Radsatz (1), welcher mittels der elektrischen Maschine (2) antreibbar ist, wobei die elektrische Maschine (2) vom Radsatz (1) in einem Fehlerfall der elektrischen Maschine (2) mittels der Überlastkupplung (12) des Antriebsstranges trennbar ist,
**dadurch gekennzeichnet, dass** für den Fehlerfall ausgelöst von einer Freigabeeinrichtung (14) der elektrischen Maschine (2) ein Bremselement (16) vorgesehen ist, welches aus einem Rotor (4) der elektrischen Maschine (2) in den Luftspalt der elektrischen Maschine (2) tritt.

6. Schienenfahrzeug (10) nach Anspruch 5, wobei der Radsatz (1) über ein Getriebe (7) mittels der elektrischen Maschine (2) antreibbar ist.

7. Verfahren zum Bremsen eines Rotors (4) einer elektrischen Maschine (2) eines Antriebsstranges eines Fahrzeuges, wobei bei einem Fehler im Antriebsstrang des Fahrzeuges (10) von der elektrischen Maschine (2) ein Überlastmoment erzeugt wird, **dadurch gekennzeichnet, dass** zur Erzeugung des Überlastmomentes ausgelöst von einer Freigabeeinrichtung (14) der elektrischen Maschine (2) ein Bremselement (16) des Rotors (4) radial aus dem Rotor (4) in den Luftspalt der elektrischen Maschine (2) tritt und das erzeugte Überlastmoment eine Überlastkupplung (12) des Antriebsstranges auslöst.

8. Verfahren nach Anspruch 7, wobei der Rotor (4) stillgesetzt wird.

9. Verfahren nach Anspruch 7 oder 8, wobei der Fehler im Antriebsstrang ein Wicklungskurzschluss im Stator (3) ist.

10. Verfahren nach Anspruch 7 oder 8, wobei zur Erzeugung des Überlastmomentes im Fehlerfall eine Bandage (16) delaminiert, wobei die Bandage das Bremselement (16) im fehlerfreien Betrieb hält.

11. Verfahren nach einem der Ansprüche 7 bis 10, wobei zur Erkennung eines Wicklungskurzschlusses im Stator (3) und Auslösung der Überlastkupplung eine mechanische Wirkungskette verwendet wird.

12. Verfahren nach einem der Ansprüche 7 bis 11, wobei eine elektrische Maschine nach einem der Ansprüche 1 bis 4 verwendet wird.

13. Verfahren nach einem der Ansprüche 7 bis 12, wobei das Verfahren bei einem Schienenfahrzeug (10), insbesondere nach einem der Ansprüche 5 bis 6 oder bei einem Straßenfahrzeug verwendet wird.

## Claims

1. Drive train of a vehicle having at least one overload coupling (12) and an electrical machine (2), wherein the electrical machine has a brake element (16) and a release device (14) and wherein a rotor (4) of the electrical machine (2) has the brake element (16) and the release device (14), **characterised in that** the overload coupling (12) is actuatable by a release of the brake element (16), wherein the brake element (16) is provided, following a release, for emerging radially from the rotor (4) and into the air gap of the electrical machine (2).

2. Drive train according to claim 1, wherein the release device (14) has a binding band (14).

3. Drive train according to claim 1 or 2, wherein the brake element is a permanent magnet or a soft magnetic element.

4. Drive train according to one of claims 1 to 3, wherein an actuation is thermally inducible and concerns, in particular, a winding short-circuit.

5. Rail vehicle (10) having a drive train according to one of claims 1 to 4 and having a wheelset (1) which is drivable by means of the electrical machine (2), wherein the electrical machine (2) is separable from the wheelset (1) in the event of a fault in the electrical machine (2) by means of the overload coupling (12) of the drive train,
**characterised in that**, for the event of a fault, actuated by a release device (14) of the electrical machine (2), a brake element (16) is provided which emerges from a rotor (4) of the electrical machine (2) into the air gap of the electrical machine (2).

6. Rail vehicle (10) according to claim 5, wherein the wheelset (1) is drivable via a transmission (7) by means of the electrical machine (2).

7. Method for braking a rotor (4) of an electrical machine (2) of a drive train of a vehicle, wherein in the event of a fault in the drive train of the vehicle (10), an overload torque is generated by the electrical machine (2), **characterised in that** for generating the overload torque, actuated by a release device (14) of the electrical machine (2), a brake element (16) of the rotor (4) emerges radially from the rotor (4) and into the air gap of the electrical machine (2) and the generated overload torque actuates an overload coupling (12) of the drive train.

8. Method according to claim 7, wherein the rotor (4) is stopped.

9. Method according to claim 7 or 8, wherein the fault in the drive train is a winding short-circuit in the stator (3).

10. Method according to claim 7 or 8, wherein for generating the overload torque in the event of a fault, a binding band (16) is delaminated, wherein during fault-free operation the binding band holds the brake element (16).

11. Method according to one of claims 7 to 10, wherein, in order to detect a winding short-circuit in the stator (3) and for actuating the overload coupling, a mechanical chain of action is used.

12. Method according to one of claims 7 to 11, wherein an electrical machine according to one of claims 1 to 4 is used.

13. Method according to one of claims 7 to 12, wherein the method is used with a rail vehicle (10), in particular according to one of claims 5 to 6, or with a road vehicle.

## Revendications

1. Chaîne cinématique d'un véhicule comportant au moins un embrayage (12) de surcharge et une machine (2) électrique, la machine électrique ayant un élément (16) de frein et un dispositif (14) de validation et dans lequel un rotor (4) de la machine (2) électrique a l'élément (16) de frein et le dispositif (14) de validation,
**caractérisée en ce que** l'embrayage (12) de surcharge peut être déclenché par une validation de l'élément (16) de frein, l'élément (16) de frein étant, après une validation, prévu pour sortir radialement du rotor (4) dans l'entrefer de la machine (2) électrique.

2. Chaîne cinématique suivant la revendication 1, dans laquelle le dispositif (14) de validation à un bandage (14).

3. Chaîne cinématique suivant l'une des revendications 1 ou 2, dans laquelle l'élément de frein est un aimant permanent ou un aimant à magnétisme doux.

4. Chaîne cinématique suivant l'une des revendications 1 à 3, dans laquelle un déclenchement peut être induit thermiquement et concerne notamment un court-circuit d'enroulement.

5. Véhicule (10) ferroviaire ayant une chaîne cinématique suivant l'une des revendications 1 à 4 et un essieu (1) qui peut être entraîné au moyen de la machine (2) électrique, la machine (2) électrique pouvant être séparée de l'essieu (1) dans le cas d'un défaut de la machine (2) électrique au moyen de l'embrayage (12) de surcharge de la chaîne cinématique, **caractérisé en ce que**, dans le cas d'un défaut, il est prévu, par un dispositif (14) de validation de la machine (2) électrique un élément (16) de frein, qui sort d'un rotor de la machine (2) électrique dans l'entrefer de la machine (2) électrique.

6. Véhicule (10) ferroviaire suivant la revendication 5, dans lequel l'essieu (1) peut être entraîné au moyen de la machine (2) électrique par l'intermédiaire d'une transmission (7).

7. Procédé pour freiner un rotor (4) d'une machine électrique d'une chaîne cinématique d'un véhicule, dans lequel, lors d'un défaut de la chaîne cinématique du véhicule (10), il peut être produit par la machine (2) électrique un couple de surcharge, **caractérisé en ce que**, pour la production du couple de surcharge, en étant déclenché par un dispositif (14) de validation de la machine (2) électrique, un élément (16) de frein du rotor (4) sort radialement du rotor (4) dans l'entrefer de la machine (2) électrique et le couple de surcharge produit déclenche un embrayage (12) de surcharge de la chaîne cinématique.

8. Procédé suivant la revendication 7, dans lequel on met le rotor (4) à l'arrêt.

9. Procédé suivant l'une des revendications 7 ou 8, dans lequel le défaut de la chaîne cinématique est un court-circuit d'enroulement dans le stator (3).

10. Procédé suivant l'une des revendications 7 ou 8, dans lequel, pour la production du couple de surcharge, dans le cas d'un défaut, on délamine un bandage (16) le bandage maintenant l'élément (16) de frein en fonctionnement sans défaut.

11. Procédé suivant l'une des revendications 7 à 10, dans lequel pour reconnaître un court-circuit d'enroulement dans le stator (3) et déclencher l'embrayage de surcharge, on utilise une chaîne d'actionnement mécanique.

12. Procédé suivant l'une des revendications 7 à 11, dans lequel on utilise une machine électrique suivant l'une des revendications 1 à 4.

13. Procédé suivant l'une des revendications 7 à 12, dans lequel on utilise le procédé dans un véhicule (10) ferroviaire, notamment suivant l'une des revendications 5 à 6, ou dans un véhicule routier.
